# EUROPEAN PATENT SPECIFICATION

(11) **EP 2 673 136 B1**
(45) Date of publication and mention of the grant of the patent: **24.12.2014**
(21) Application number: 12703251.4
(22) Date of filing: 07.02.2012
(51) Int. Cl.: B32B 5/20, B32B 15/04, B32B 27/18

(54) **METHOD FOR PRODUCING A LAMINATE, LAMINATE, METHOD FOR PRODUCING A PART THEREFROM, AND PART PRODUCED**
VERFAHREN ZUR HERSTELLUNG EINES LAMINATS, LAMINAT, VERFAHREN ZUR HERSTELLUNG EINES TEILS DARAUS UND HERGESTELLTES TEIL
MÉTHODE DE FABRICATION D'UN STRATIFIÉ, STRATIFIÉ, MÉTHODE DE FABRICATION D'UNE PIÈCE À PARTIR DE CELUI-CI ET PIÈCE FABRIQUÉE

(30) Priority: 08.02.2011 EP 11000981
(43) Date of publication of application: 18.12.2013
(73) Proprietor: Tata Steel IJmuiden BV, 1970 CA IJmuiden (NL)
(72) Inventor: VERLOOP, Willem, Cornelis, NL-1970 CA Ijmuiden (NL); JANSEN, Maurice, Jean, Robert, NL-1970 CA Ijmuiden (NL)
(74) Representative: Kruit, Jan
(86) International application number: PCT/EP2012/000547
(87) International publication number: WO 2012/107210

(56) References cited:
- EP-A2- 1 201 422
- US-A1- 2004 211 934
- US-A1- 2006 188 726
- US-A1- 2007 104 958

## Description

The invention relates to a method for producing a laminate comprising a metal strip, sheet or blank on which a layer is present. The invention also relates to a laminate produced thereby, to a method for producing a part therefrom, and to a part produced from that laminate.

Such laminates are well-known and often comprise a thin metal substrate of at most 1 mm thickness, on which a thicker plastic layer is present. However, such a layer often poses problems when handling the laminate, for instance during cutting, drilling, drawing and/or deep-drawing to produce a part from the laminate. These problems usually occur because the plastic layer is soft and tends to pollute the equipment. The manufacturing steps are however needed in producing for instance automotive parts.

These problems can be resolved by using two metal layers that have a plastic layer in between. Such laminates or sandwiches can be handled much better and are relatively easy to machine or draw, but they have the drawback that they are relatively heavy due to the two metal layers. Moreover, high shear forces are generated during drawing and deep-drawing of this sandwich material.

It is an object of the invention to provide a laminate comprising a metal substrate and a layer that has a good isolation against heat and noise during use, that is light-weight, that has good machinability and drawability, and that provides a sufficient rigidity.

It is a further object of the invention to provide a part produced from that laminate.

It is also an object of the invention to provide a method to produce the laminate.

This laminate is primarily intended for use in the automotive industry, however, other markets could for instance be the building industry.

According to the invention a method is provided for producing a laminate comprising a metal strip, sheet or blank on which a layer is present, wherein the layer is present over at least part of the surface of the strip, sheet or blank, and wherein the layer contains expandable microspheres embedded in a thermoplastic material, which expandable microspheres have an expansion temperature between 90 and 220° C, the method comprising the following steps:
- providing a metal strip, sheet or blank
- laminating the metal strip, sheet or blank with the layer containing the expandable material, wherein the laminating is performed by direct extrusion or foil coating.

The laminate produced using the method has a metal substrate and a thin layer on the substrate, which layer can be expanded (after the machining and/or drawing of the laminate) due to the heating of the part when it is present in for instance the body-in-white of an automobile, which heating always takes place for the curing of the coatings on the body-in-white. The layer can easily be expanded to a thickness that is seven times the thickness of the original layer due to the expandability of the expandable microspheres, which provide a very controlled expansion of the layer. The laminate thus provides a very even layer after heating, which gives a very good isolation for heat and noise. Before the heating the layer is relatively thin and hard, and thus can be easily machined and/or (deep)drawn. Preferably the expansion of the microspheres is effected at temperatures between 120 and 210° C, more preferably between 140 and 200° C, since these are the temperature ranges in which coatings on a body-in-white are cured.

The layer containing the expandable microspheres can be easily manufactured according to the method using extrusion or foil coating Direct extrusion is often the most cost-effective way to provide such a layer on a substrate such as a metal strip. However, foil coating, in which first the layer is produced in the form of a coil, and the coil is attached to the substrate, is also possible.

Preferably the foil coating is performed by film lamination of a prefabricated extrusion film. Here, the extrusion film is first produced and afterwards attached to the substrate.

According to a preferred embodiment the layer containing expandable microspheres in a further step is covered by a top layer such as a foil, woven or non-woven material. By adding this top layer the laminate will have a higher bending resistance and a better appearance.

Preferably, the layer containing expandable microspheres and the top layer are coextruded. This is a fast and economical way to provide both layers.

According to a preferred method a bonding layer is provided on the metal strip, sheet or blank before it is laminated with the layer, which bonding layer for instance comprises PE (poly ethylene) or PP (poly propylene). Such a bonding layer improves the bonding between the substrate and the layer containing the expandable microspheres. It is also possible to provide the bonding layer on the layer containing the expandable microspheres before this is bonded to the substrate. In this way, it is also possible to co-extrude the bonding layer together with the layer containing the expandable microspheres, to which also the top layer can be added.

The laminate produced using the method is a second aspect of the invention.

According to a preferred embodiment the thermoplastic material is a thermoplastic material having a high plasticity in the temperature range of 90 - 220° C, such as EVA (ethylene vinyl acetate) or PE (poly ethylene). Such thermoplastic materials can be mixed with the expandable microspheres at temperatures below the expansion temperature of the microspheres.

Preferably the metal strip, sheet or blank is a steel strip, sheet or blank which has a thickness of 0.2 to 3.0 mm, preferably of 0.3 to 0.8 mm. Such thicknesses are used in the automotive industry for outer body parts, but also in the building industry.

Preferably the steel strip, sheet or blank has been zinc-coated. Zinc-coated steel is nowadays almost always used in the automotive industry for reasons of corrosion prevention.

According to a preferred embodiment the layer has a thickness of 0.1 to 5 mm, preferably a thickness of 0.2 to 2 mm, and more preferably a thickness of 0.3 to 1 mm. Such layer thicknesses can still be handled when a part has for instance to be deep-drawn, and the layer remains intact during such mechanical operations. Layers with higher thicknesses may be damaged during mechanical operations.

According to a preferred embodiment 2 - 40 weight % expandable microspheres have been added to the layer, and preferably 5 - 30 weight% expandable microspheres have been added to the layer.. Such an amount of expandable microspheres in the layer provides a good expandability of the layer. More expandable microspheres can result in loss of coherence of the expanded layer.

According to an advantageous embodiment the layer covers a portion of the metal strip, sheet or blank, preferably a portion excluding at least one of the edges of the strip, sheet or blank. These edges without a layer can be used for adhering the part after forming and expansion of the layer to other parts, for instance by (spot) welding.

Preferably the layer is covered by a non-expandable top layer such as a foil, woven or non-woven material, more preferably having a thickness between 1 micron and 1 millimetre. By adding this top layer the laminate will have a higher bending resistance and a better appearance.

Preferably the top layer comprises a thermoplastic material which has been reinforced, for instance by fibres. Such a top layer provides a good protection of the layer during and after mechanical operations.

According to a preferred embodiment a bonding layer is present between the metal strip, sheet or blank and the layer, which bonding layer for instance comprises PE (poly ethylene) or PP (poly propylene). Such a bonding layer provides a very good adherence between the steel substrate and the layer, and the PE or PP layer can relatively easily be processed to form such a bonding layer.

According to a third aspect of the invention a method is provided for producing a part using the laminate according to the second aspect of the invention or produced with the method according to the first aspect of the invention, wherein the laminate is machined or formed to obtain a part, which part is heated to a temperature between 90 and 220° C to obtain an expanded layer.

The part thus produced is easily formed of machined, and after the heating step is provided with a relatively thick, insulating layer due to the expanded microspheres. In this form, the parts can be used in the automotive industry or the building industry, for instance.

According to a fourth aspect of the invention there is provided a part produced from a laminate according to the second aspect of the invention elucidated above, using the method according to the third aspect of the invention, which part has a layer having a thickness between 0,2 and 25 mm after heating to a temperature between 90 and 220° C, preferably a thickness between 0.5 and 10 mm.

This is the part that is formed from the laminate according to the first aspect of the invention, after mechanical treatment, heating and expansion of the microspheres.

The invention will be elucidated with reference to the following examples.

In a first example use is made of a steel substrate with the standard composition of a mild steel. The steel substrate has a thickness of approximately 0.5 mm. The steel substrate has been cleaned and a bonding layer of PP has been provided on the steel substrate at a temperature of 210° C. The PP bonding layer has a thickness of approximately 5 micron.

An expandable layer has been provided consisting of EVA to which 10 weight% expandable microspheres have been added. The expandable microspheres are of the type 950 DU 120.

The expandable layer has been laminated onto the metal substrate with the PP bonding layer by extrusion, such that the layer has a thickness of 0.5 mm.

In the example, the laminate is not machined or formed. The laminate is subjected to a temperature of 180° C during a time interval of 10 minutes. This heating of the laminate resulted in an expansion of the layer with 200%, so the layer after heating has a thickness of 1.5 mm.

In a second example use is made of a steel substrate with the standard composition of a mild steel. The steel substrate has a thickness of approximately 0.5 mm. The steel substrate has been cleaned and a bonding layer of PP has been provided on the steel substrate at a temperature of 210° C. The PP bonding layer has a thickness of approximately 5 micron.

An expandable layer has been provided consisting of low density PE to which 20 weight% expandable microspheres have been added. The expandable microspheres are of the type 950 DU 120.

The expandable layer has been laminated onto the metal substrate with the PP bonding layer by extrusion, such that the layer has a thickness of 2.5 mm.

A top layer of woven material is adhered on top of the expandable laminate.

In the example, the laminate is not machined or formed. The laminate is subjected to a temperature of 180° C during a time interval of 10 minutes. This heating of the laminate resulted in an expansion of the layer with 144%, so the layer after heating has a thickness of 6.1 mm.

The expanded layer improves the rigidity of the substrate. In Table 1 is shown the rigidity of a steel substrate of 0.5 mm thick as used in example 1 and 2, without layer, with a layer as in example 1 and 2, both before and after expansion, and as a comparison a steel substrate of 0.7 mm thick. The substrates have been tested in a three point bending test, in which the substrates having a length of 160 mm and a width of 100 mm were tested. These test pieces were loaded centrally in between two supports. Measured is the force to get a standard deflection of the test piece in between the supports. To compare the rigidity of the test pieces, the force exerted in the steel substrate of 0.5 mm without layer is defined as 100%. It will be clear from Table 1 that the rigidity improves substantially by the expanded layers as described in the examples above.

**Table 1: Rigidity of the material**

| Substrate + layer | Unexpanded layer | Expanded layer |
|---|---|---|
| 0.5 steel | 100 % | |
| 0.7 steel | 275 % | |
| 0.5 steel + layer example 1 | 105% | 160 % |
| 0.5 steel + layer example 2 + top layer | 110 % | 405 % |

In a third example use is made of a blank of mild steel, which blank is used to draw or deep draw a part for an automotive vehicle. The blank is provided with the same material as used for the expandable layer as exemplified in example 1. However, according to this third example the layer on the blank has such a shape that the part produced from the blank has portions where no layer is present, such that the part can be adhered to the vehicle without being hampered by the layer. After the layer is put on the steel blank, the blank is drawn or deep drawn to form a part, the part is cut into shape, and the part is adhered to the vehicle. The vehicle is coated and to cure the coating the vehicle is heated to a temperature of approximately 180° C. Due to this heating step the layer expands and forms a layer which improves the rigidity of the part and provides a heat and noise isolation in the vehicle. The expanded layer is only present at that portion of the part where it is not adhered to other parts of the vehicle.

It will be clear to the person skilled in the art that more or less expandable microspheres can be added to the EVA or PE, which will result is higher or lower expansion rates of the layer. It will also be clear that other types of material can be used for the layer in which the expandable microspheres are embedded, and that other metal substrates can be used.

A top layer as used in the second example is only to be added when required.

The scope of the invention is limited by the following claims only.

## Claims

1. Method for producing a laminate comprising a metal strip, sheet or blank on which a layer is present, wherein the layer is present over at least part of the surface of the strip, sheet or blank, and wherein the layer contains expandable microspheres embedded in a thermoplastic material, which expandable microspheres have an expansion temperature between 90 and 220° C, the method comprising the following steps:
- providing a metal strip, sheet or blank
- laminating the metal strip, sheet or blank with the layer containing the expandable material, wherein the laminating is performed by direct extrusion or foil coating.

2. Method according to claim 1, wherein the foil coating is performed by film lamination of a prefabricated extrusion film..

3. Method according to claim 1 or 2, wherein the layer containing expandable microspheres in a further step is covered by a top layer such as a foil, woven or non-woven material.

4. Method according to claim 3, wherein the layer containing expandable microspheres and the top layer are co-extruded.

5. Method according to claim 1, 2, 3 or 4, wherein a bonding layer is provided on the metal strip, sheet or blank before it is laminated with the layer containing expandable microspheres, which bonding layer for instance comprises PE (poly ethylene) or PP (poly propylene).

6. Laminate produced in accordance with the method of any one of the preceding claims.

7. Laminate according to claim 6, wherein the thermoplastic material is a thermoplastic material having a high plasticity in the temperature range of 90-220° C, such as EVA (ethylene vinyl acetate) or PE (poly ethylene).

8. Laminate according to claim 6 or 7, wherein the metal strip, sheet or blank is a steel strip, sheet or blank which has a thickness of 0.2 to 3.0 mm, preferably of 0.3 to 0.8 mm.

9. Laminate according to claim 8, wherein the steel strip, sheet or blank has been zinc-coated.

10. Laminate according to any one of the preceding claims 6 - 9, wherein the layer has a thickness of 0.1 to 5 mm, preferably a thickness of 0.2 to 2 mm, and more preferably a thickness of 0.3 to 1 mm.

11. Laminate according to any one of the preceding claims 6 - 10, wherein 2 - 40 weight % expandable microspheres have been added to the layer, and preferably 5 - 30 weight % expandable microspheres have been added to the layer.

12. Laminate according to any one of the preceding claims 6 - 11, wherein the layer covers a portion of the metal strip, sheet or blank, preferably a portion excluding at least one of the edges of the strip, sheet or blank.

13. Laminate according to any one of the preceding claims 6 - 12, wherein the layer is covered by a non-expandable top layer such as a foil, woven or non-woven material, preferably having a thickness between 1 micron and 1 millimetre.

14. Laminate according to claim 13, wherein the top layer comprises a thermoplastic material which has been reinforced, for instance by fibres.

15. Laminate according to any one of the preceding claims 6 - 14, wherein a bonding layer is present between the metal strip, sheet or blank and the layer, which bonding layer for instance comprises PE (poly ethylene) or PP (poly propylene).

16. Method for producing a part using the laminate according to claim 6 - 15 or produced with the method according to claims 1 - 5, wherein the laminate is machined or formed to obtain a part, which part is heated to a temperature between 90 and 220° C to obtain an expanded layer.

17. Part produced in accordance with the method of claim 16 from a laminate according to any one of the preceding claims 6 - 15, wherein the layer has a thickness between 0.2 and 25 mm after heating to a temperature between 90 and 220° C, preferably a thickness between 0.5 and 10 mm.

## Patentansprüche

1. Verfahren zur Herstellung eines Laminats, umfassend einen Metallstreifen, ein Metallblatt oder einen Metallzuschnitt, auf dem eine Schicht vorhanden ist, wobei die Schicht über mindestens einem Teil der Fläche des Streifens, des Blatts oder des Zuschnitts vorhanden ist, und wobei die Schicht expandierbare Mikrokügelchen umfasst, die in einem thermoplastischen Material eingebettet sind, wobei die expandierbaren Mikrokügelchen eine Expansionstemperatur zwischen 90 und 220 °C aufweisen, wobei das Verfahren die folgenden Schritte umfasst:
- Bereitstellen eines Metallstreifens, eines Metallblatts oder eines Metallzuschnitts,
- Laminieren des Metallstreifens, des Metallblatts oder des Metallzuschnitts mit der Schicht, die das expandierbare Material umfasst, wobei die Laminierung durch eine direkte Extrusion- oder Folienbeschichtung erfolgt.

2. Verfahren nach Anspruch 1, wobei die Folienbeschichtung durch eine Filmlaminierung eines vorgefertigten Extrusionsfilms erfolgt.

3. Verfahren nach Anspruch 1 oder 2, wobei die Schicht mit expandierbaren Mikrokügelchen in einem weiteren Schritt durch eine obere Schicht wie z.B. einer Folie, einem textilem oder Vliesmaterial bedeckt wird.

4. Verfahren nach Anspruch 3, wobei die Schicht mit expandierbaren Mikrokügelchen und die obere Schicht koextrudiert werden.

5. Verfahren nach Anspruch 1, 2, 3 oder 4, wobei eine Bindungsschicht auf dem Metallstreifen, dem Metallblatt oder dem Metallzuschnitt bereitgestellt wird, bevor er/es mit der Schicht mit expandierbaren Mikrokügelchen laminiert wird, wobei die Bindungsschicht z.B. PE (Polyethylen) oder PP (Polypropylen) umfasst.

6. Laminat, das gemäß dem Verfahren eines der vorhergehenden Ansprüche hergestellt ist.

7. Laminat nach Anspruch 6, wobei das thermoplastische Material ein thermoplastisches Material mit einer hohen Plastizität im Temperaturbereich von 90-220 °C ist, wie z.B. EVA (Ethylenvinylacetat) oder PE (Polyethylen).

8. Laminat nach Anspruch 6 oder 7, wobei der Metallstreifen, das Metallblatt oder der Metallzuschnitt ein Stahlstreifen, ein Stahlblatt oder ein Stahlzuschnitt ist, der/das eine Dicke von 0,2 bis 3,0 mm, vorzugsweise von 0,3 bis 0,8 mm aufweist.

9. Laminat nach Anspruch 8, wobei der Stahlstreifen, das Stahlblatt oder der Stahlzuschnitt Zink-beschichtet wurde.

10. Laminat nach einem der vorhergehenden Ansprüche 6-9, wobei die Schicht eine Dicke von 0,1 bis 5 mm aufweist, vorzugsweise eine Dicke von 0,2 bis 2 mm und insbesondere eine Dicke von 0,3 bis 1 mm.

11. Laminat nach einem der vorhergehenden Ansprüche 6-10, wobei 2-40 Gew% expandierbare Mikrokügelchen der Schicht zugegeben wurden und vorzugsweise 5-30 Gew% expandierbare Mikrokügelchen der Schicht zugegeben wurden.

12. Laminat nach einem der vorhergehenden Ansprüche 6-11, wobei die Schicht einen Abschnitt des Metallstreifens, des Metallblatts oder des Metallzuschnitts abdeckt, vorzugsweise einen Abschnitt, davon ausgeschlossen mindestens eine der Kanten des Streifens, des Blatts oder der Ausschnitts.

13. Laminat nach einem der vorhergehenden Ansprüche 6-12, wobei die Schicht von einer nicht expandierbaren oberen Schicht wie z.B. einer Folie, einem textilen oder Vliesmaterial bedeckt ist, vorzugsweise mit einer Dicke zwischen 1 Mikrometer und 1 Millimeter.

14. Laminat nach Anspruch 13, wobei die obere Schicht ein thermoplastisches Material umfasst, das verstärkt wurde, z.B. durch Fasern.

15. Laminat nach einem der vorhergehenden Ansprüche 6-14, wobei eine Bindungsschicht zwischen dem Metallstreifen, dem Metallblatt oder dem Metallzuschnitt und der Schicht vorhanden ist, wobei die Bindungsschicht z.B. PE (Polyethylen) oder PP (Polypropylen) umfasst.

16. Verfahren zur Herstellung eines Teils, der das Laminat nach Anspruch 6-15 verwendet, oder hergestellt mit dem Verfahren nach Anspruch 1 - 5, wobei das Laminat bearbeitet oder geformt wird, um einen Teil zu erhalten, wobei der Teil auf eine Temperatur zwischen 90 und 220 °C erhitzt wird, um eine expandierte Schicht zu erhalten.

17. Teil, der nach dem Verfahren von Anspruch 16 aus einem Laminat nach einem der vorhergehenden Ansprüche 6-15 hergestellt ist, wobei die Schicht eine Dicke zwischen 0,2 und 25 mm nach der Erhitzung auf eine Temperatur zwischen 90 und 220 °C aufweist, vorzugsweise eine Dicke zwischen 0,5 und 10 mm.

## Revendications

1. Un procédé de production d'un stratifié comprenant une bande, feuille ou ébauche de métal sur laquelle une couche est présente, où la couche est présente sur au moins une partie de la surface de la bande, feuille ou ébauche, et où la couche contient des microsphères expansibles imbriquées dans un matériau thermoplastique, lesdites microsphères expansibles possédant une température d'expansion entre 90 et 220°C, le procédé comprenant les opérations suivantes :
- la fourniture d'une bande, feuille ou ébauche de métal,
- la stratification de la bande, feuille ou ébauche de métal avec la couche contenant le matériau expansible, où la stratification est exécutée par extrusion directe ou similisage.

2. Le procédé selon la Revendication 1, où le similisage est exécuté par stratification de film d'un film d'extrusion préfabriqué.

3. Le procédé selon la Revendication 1 ou 2, où la couche contenant des microsphères expansibles est dans une opération complémentaire recouverte par une couche supérieure telle qu'un matériau en feuille, tissé ou non tissé.

4. Le procédé selon la Revendication 3, où la couche contenant des microsphères expansibles et la couche supérieure sont co-extrudées.

5. Le procédé selon la Revendication 1, 2, 3 ou 4, où une couche de liaison est placée sur la bande, feuille ou ébauche de métal avant qu'elle ne soit stratifiée avec la couche contenant des microsphères expansibles, ladite couche de liaison contenant par exemple du PE (polyéthylène) ou du PP (polypropylène).

6. Un stratifié produit conformément au procédé selon l'une quelconque des Revendications précédentes.

7. Le stratifié selon la Revendication 6, où le matériau thermoplastique est un matériau thermoplastique possédant une plasticité élevée dans la plage de température de 90 à 220°C, tel que EVA (acétate de vinyle-éthylène) ou PE (polyéthylène).

8. Le stratifié selon la Revendication 6 ou 7, où la bande, feuille ou ébauche de métal est une bande, feuille ou ébauche d'acier qui possède une épaisseur de 0,2 à 3,0 mm, de préférence de 0,3 à 0,8 mm.

9. Le stratifié selon la Revendication 8, où la bande, feuille ou ébauche d'acier a été revêtue de zinc.

10. Le stratifié selon l'une quelconque des Revendications précédentes 6 à 9, où la couche possède une épaisseur de 0,1 à 5 mm, de préférence une épaisseur de 0,2 à 2 mm, et de préférence encore une épaisseur de 0,3 à 1 mm.

11. Le stratifié selon l'une quelconque des Revendications précédentes 6 à 10, où de 2 à 40% en poids de microsphères expansibles ont été ajoutées à la couche, et de préférence de 5 à 30% en poids de microsphères expansibles ont été ajoutées à la couche.

12. Le stratifié selon l'une quelconque des Revendications précédentes 6 à 11, où la couche recouvre une partie de la bande, feuille ou ébauche de métal, de préférence une partie excluant au moins une des bordures de la bande, feuille ou ébauche.

13. Le stratifié selon l'une quelconque des Revendications précédentes 6 à 12, où la couche est recouverte par une couche supérieure non expansible telle qu'un matériau en feuille, tissé ou non tissé, de préférence possédant une épaisseur entre 1 micron et 1 millimètre.

14. Le stratifié selon la Revendication 13, où la couche supérieure contient un matériau thermoplastique qui a été renforcé, par exemple par des fibres.

15. Le stratifié selon l'une quelconque des Revendications précédentes 6 à 14, où une couche de liaison est présente entre la bande, feuille ou ébauche de métal et la couche, ladite couche de liaison contenant par exemple du PE (polyéthylène) ou du PP (polypropylène).

16. Le procédé de production d'une pièce au moyen du stratifié selon les Revendications 6 à 15 ou produite avec le procédé selon les Revendications 1 à 5, où le stratifié est usiné ou formé de façon à obtenir une pièce, ladite pièce étant chauffée à une température entre 90 et 220°C de façon à obtenir une couche expansée.

17. Une pièce produite conformément au procédé de la Revendication 16 à partir d'un stratifié selon l'une quelconque des Revendications précédentes 6 à 15, où la couche possède une épaisseur entre 0,2 et 25 mm après chauffage à une température entre 90 et 220°C, de préférence une épaisseur entre 0,5 et 10 mm.
